# EUROPEAN PATENT SPECIFICATION

(11) **EP 3 617 556 B1**
(45) Date of publication and mention of the grant of the patent: **06.10.2021**
(21) Application number: 19193509.7
(22) Date of filing: 26.08.2019
(51) Int. Cl.: F16H 57/027, F16H 57/031, B60T 17/22, B60T 17/04, F16D 48/02, F16D 25/00, F16H 57/04, F01M 11/02, F16D 125/16

(54) **LIQUID PATH SYSTEM**
FLÜSSIGKEITSWEGSYSTEM
SYSTÈME DE TRAJET DE LIQUIDE

(30) Priority: 30.08.2018 JP 2018162095
(43) Date of publication of application: 04.03.2020
(73) Proprietor: Honda Motor Co., Ltd., Tokyo 107-8556 (JP)
(72) Inventor: Sakuyama, Hisashi, Saitama, 351-0024 (JP)
(74) Representative: Kiwit, Benedikt

(56) References cited:
- EP-A2- 1 978 271
- JP-A- H1 047 513
- JP-A- 2003 314 670
- US-A- 5 050 840
- US-A1- 2007 295 158

## Description

### [TECHNICAL FIELD]

The present invention relates to a liquid path system comprising: a liquid path member that defines a screw groove of a female screw in a spiral manner from an opening in a through-hole that has an axis directed in an upright posture, the through-hole being opened upward and is connected to a liquid path; and a male screw member that is screwed from the opening into the liquid path member and has a screw thread that enters the screw groove.

### [BACKGROUND ART]

In JP S60 ― 84872 U, an air bleeder system including a male screw screwed from the outside into an air bleeding hole formed in a wall of a liquid path is disclosed. When the male screw is loosened, a ball is separated from a valve seat in association with a rise in the pressure in the liquid path and air is discharged to the outside of the liquid path. When a negative pressure is generated in the liquid path, the ball sits on the valve seat and the entry of air toward the liquid path is blocked.

In JP 2010 ― 067 857 A, an oil-immersed solenoid including a male screw screwed to a casing that defines a hydraulic chamber is disclosed. A seal member is sandwiched between the male screw and the casing between a screw groove of the male screw and external air. Connection between a discharging hole that extends in the radial direction from a through-hole along the axis and the external air is disconnected. When the male screw is loosened, the seal member gets farther away from the casing and the discharging hole is opened to the external air. Air bubbles in the hydraulic chamber can be discharged toward the external air.

US 5 050 840 A discloses an electromagnet capable of being used for a solenoid valve. In the electromagnet, a pipe unit is provided at one end part thereof. A cap is joined to the other end part thereof. In order to let air out from the interior of the pipe unit, the cap can be turned so that an air vent hole is in a highest position, so that air can be released from the air vent hole.

EP 1 978 271 A2 discloses a bleed device for use in a hydraulic circuit of a cylinder apparatus, including a means for communicating or blocking ports in an oil passage. In order to do so, a bleeder plug is fitted in rubber material, in which a channel is formed. The oil passage connecting the ports passes through the channel. When the plug is pressed against an inner peripheral surface of the rubber material, the channel is closed.

JP 2003 ― 314 670 A shows an air breather device including a cylindrical element connected to an opening portion provided on a casing storing oil, and the cap screwed on an upper part of the cylindrical element to block the upper part of the cylindrical element. A ventilating groove communicating the inside of the casing and the outside of the cylindrical element is provided between the cylindrical element and the cap. The cap is provided with a cap member having a first thread portion in an outer periphery; and a coupling member having a third screw portion screwed with a second portion formed on the cylindrical element in an inner periphery, having a fourth thread portion screwed with the first thread portion of the cap member in the inner periphery, and formed in a pipe shape. The ventilating groove is provided between the cylindrical element and the coupling member.

### [SUMMARY OF THE INVENTION]

### [PROBLEM TO BE SOLVED BY THE INVENTION]

In JP S60 ― 84872 Uand JP 2010 ― 067 857 A, when the screw is screwed, air remains in the screw groove due to a backlash of the screw structure. The air leaks out to a space in an air bleeding hole along with the elapse of time. The air that remains in the screw groove at the time of assembly of the male screw cannot be discharged to external air.

The present invention is made in view of the above-described actual circumstances and intends to provide a liquid path system that can bleed air remaining in a screw groove at the time of assembly of a male screw.

### [MEANS FOR SOLVING THE PROBLEM]

According to the present invention, the aforementioned problems are solved by a liquid path system according to claim 1.

Preferred embodiments of the present invention are disclosed in the dependent claims.

### [EFFECTS OF THE INVENTION]

According to a first aspect of the present invention, when the liquid path is filled with a liquid, the liquid circulates from the long groove to the clearance between the screw thread and the screw groove. The circulating liquid pushes out air from the clearance and the long groove toward the opening. In this manner, the air that remains in the screw groove can be discharged from the opening. Air bleeding is implemented.

According to a second aspect of the present invention, between adjacent screw grooves, air linearly goes out along the long groove with avoidance of the screw thread of the male screw. Thus, smooth air removal can be implemented.

According to a third aspect of the present invention, because the long groove extends in parallel to the axis, the long groove can be easily processed.

According to a fourth aspect of the present invention, because air is lighter than the liquid, air rises in the clearance between the screw groove and the screw thread due to the action of the gravity and flows into the long groove. Thus, efficient air removal can be implemented.

According to the first aspect of the present invention, the air that flows into the long groove from the clearance between the screw groove and the screw thread can be discharged from the air removing passage to external air. In this manner, air removal from the liquid path is implemented.

According to the first aspect of the present invention, when the liquid path is filled with a liquid, the liquid circulates from the long groove to the clearance between the screw thread and the screw groove also in the linking member. The circulating liquid pushes out air from the clearance and the long groove toward the opening. In this manner, the air that remains in the screw groove can be discharged from the opening. Air bleeding is implemented. The flexibility in routing of the liquid path is improved due to the joining of the linking member to the liquid path member.

According to a fifth aspect of the present invention, air removal is favorably implemented from the liquid path and therefore the responsiveness of the clutch can be enhanced.

### [BRIEF DESCRIPTION OF THE DRAWINGS]

[FIG. 1] FIG. 1 is a side view schematically illustrating the overall configuration of a two-wheeled motor vehicle (saddle-type vehicle) according to one embodiment of the present invention.
[FIG. 2] FIG. 2 is an enlarged side view of an internal combustion engine.
[FIG. 3] FIG. 3 is an enlarged sectional view of the internal combustion engine observed at a cut plane including a rotation axis of a crankshaft, an axis of a main shaft, and an axis of a countershaft.
[FIG. 4] FIG. 4 is an enlarged plan view schematically illustrating the relation among a lifter member, lifter plates, and a ring-shaped support member.
[FIG. 5] FIG. 5 schematically illustrates an oil path system according to a first embodiment and is an enlarged sectional view of the oil path system observed at a cut plane including an axis of a first through-hole and an axis of a second through-hole.
[FIG. 6] FIG. 6 is an enlarged plan view of the oil path system that is observed from a vehicle side surface and partly includes a section.
[FIG. 7] FIG. 7 is an enlarged sectional view of the oil path system observed at a cut plane including an axis of a male screw member and an axis of an air removing bolt.
[FIG. 8] FIG. 8 schematically illustrates an oil path system according to a second embodiment and is an enlarged sectional view of the oil path system observed at a cut plane including an axis of an air removing bolt.

### [MODES FOR CARRYING OUT THE INVENTION]

Embodiments of the present invention will be described below with reference to the accompanying drawings. Here, up, down, front, rear, left, and right directions of the vehicle body are defined based on the eyes of a rider who rides a two-wheeled motor vehicle.

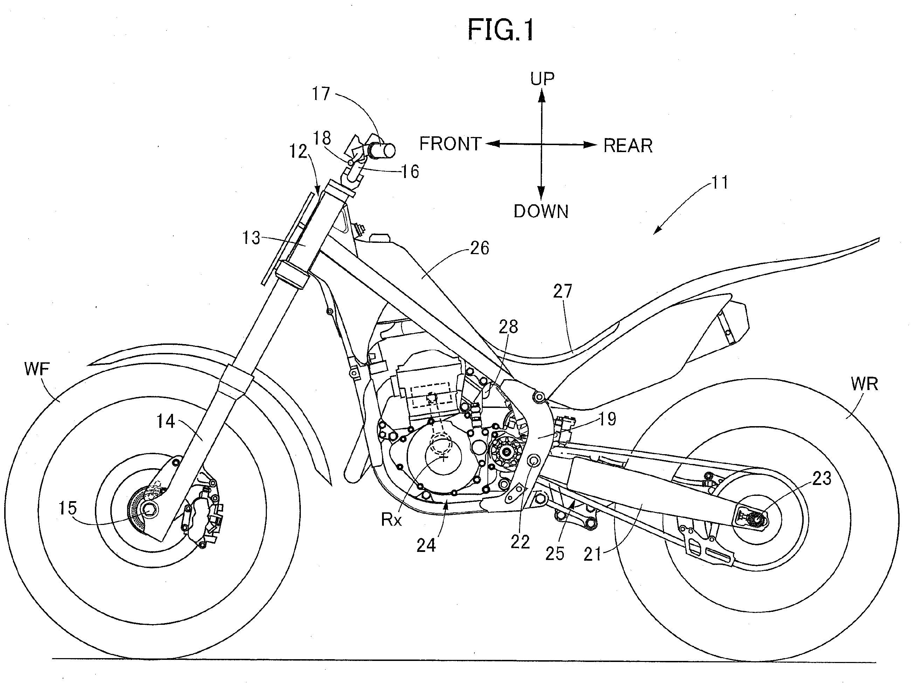

FIG. 1 schematically illustrates the overall configuration of a two-wheeled motor vehicle (saddle-type vehicle) according to one embodiment. A two-wheeled motor vehicle 11 includes a vehicle body frame 12. A front fork 14 is steerably supported by a head pipe 13 at the front end of the vehicle body frame 12. A front wheel WF is supported by the front fork 14 rotatably around an axle 15.

A handlebar 16 is joined to the front fork 14 on the upper side of the head pipe 13. Grips 17 are fixed to both ends of the handlebar 16. A clutch lever 18 is set in front of the left grip 17. The rider can grasp the clutch lever 18 with the left hand while hooking the left hand around the left grip 17.

On the rear side of the vehicle body frame 12, a swingarm 21 is supported by a pivot frame 19 swingably around a support shaft 22 that horizontally extends in the vehicle width direction. A rear wheel WR is supported by the rear end of the swingarm 21 rotatably around an axle 23.

An internal combustion engine 24 is mounted on the vehicle body frame 12 between the front wheel WF and the rear wheel WR. The internal combustion engine 24 generates power around a rotation axis Rx. The power of the internal combustion engine 24 is transmitted to the rear wheel WR through a power train 25. In the present description, explanation is often omitted regarding the same configuration as a known internal combustion engine.

A fuel tank 26 that stores a fuel is mounted on the vehicle body frame 12 above the internal combustion engine 24. A rider seat 27 is mounted on the vehicle body frame 12 on the rear side of the fuel tank 26. The fuel is supplied from the fuel tank 26 to a fuel injection system 28 of the internal combustion engine 24. The rider straddles the rider seat 27 in driving of the two-wheeled motor vehicle 11.

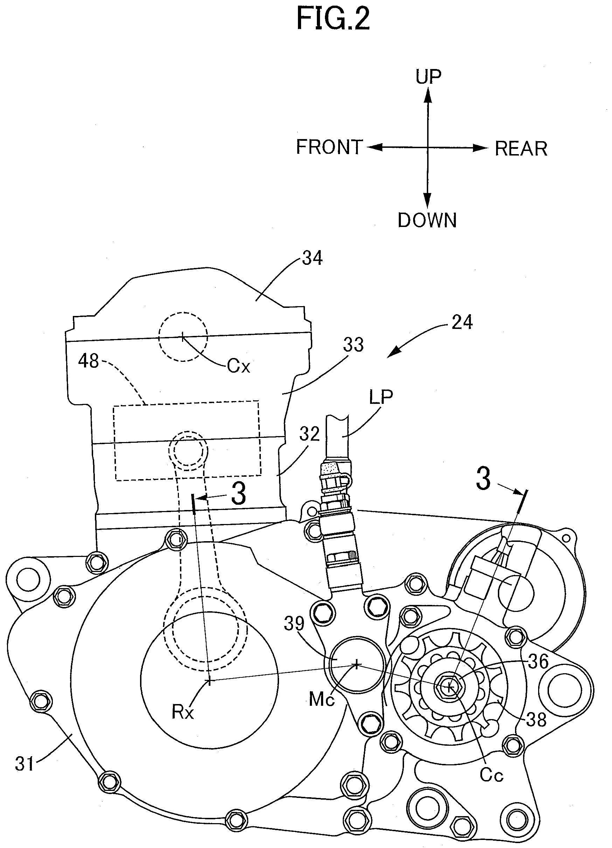

As illustrated in FIG. 2, the internal combustion engine 24 includes: a crankcase 31 that is linked to the vehicle body frame 12 and supports a crankshaft that generates power around the rotation axis Rx; a cylinder block 32 that is joined to the crankcase 31 and stands upright from the crankcase 31; a cylinder head 33 that is joined to the upper end of the cylinder block 32 and supports an intake valve and an exhaust valve that face a combustion chamber; and a head cover 34 that is joined to the upper end of the cylinder head 33 and supports, between the cylinder head 33 and the head cover 34, a camshaft that rotates around an axis Cx and controls operation of the intake valve and the exhaust valve. In the crankcase 31, a multi-stage transmission (hereinafter, referred to as "transmission") 37 including a main shaft (driving force transmitting shaft) 35 supported rotatably around an axis Mc and a countershaft 36 supported rotatably around an axis Cc is housed as described later. A sprocket 38 of the power train 25 is fixed to the tip end of the countershaft 36 protruding from the crankcase 31 in such a manner as to be incapable of relative rotation.

A cylinder casing 39 is linked to the crankcase 31 on an extended line of the main shaft 35. A master cylinder (not illustrated) is connected to the cylinder casing 39 through an oil path system (liquid path system) LP. The master cylinder supplies a hydraulic pressure into the cylinder casing 39 in response to grasping operation of the clutch lever 18.

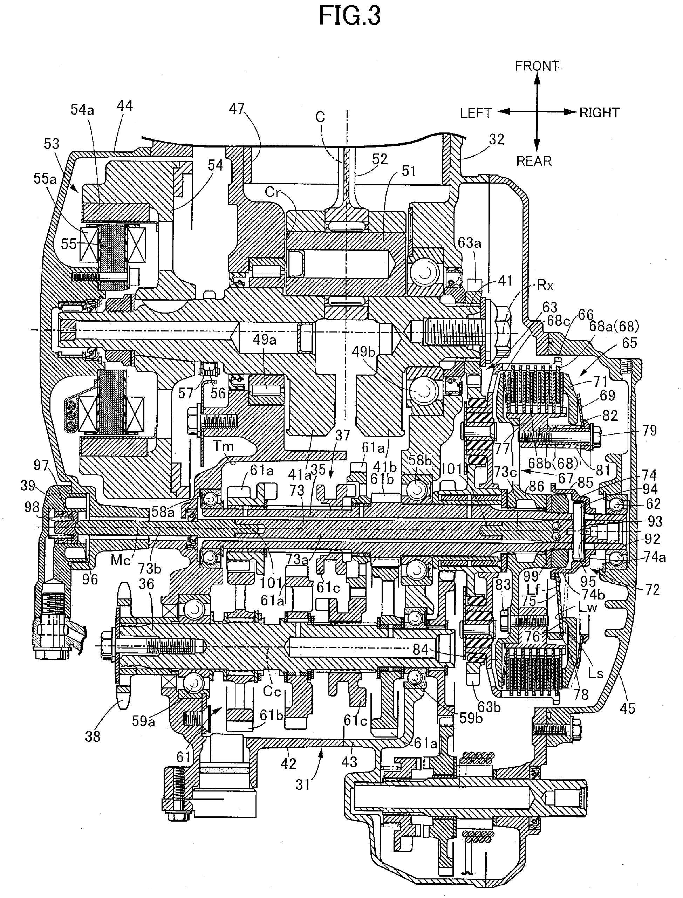

As illustrated in FIG. 3, the crankcase 31 includes a first case half body 42 and a second case half body 43 that are joined to each other at mating surfaces orthogonal to the rotation axis Rx of a crankshaft 41 and define a crank chamber Cr that houses a crank of the crankshaft 41. A left cover 44 is joined to the first case half body 42 at a mating surface orthogonal to the rotation axis Rx of the crankshaft 41. The left cover 44 defines a generator room between the left cover 44 and the first case half body 42. A right cover 45 is joined to the second case half body 43 at a mating surface orthogonal to the rotation axis Rx of the crankshaft 41. The right cover 45 defines a clutch chamber between the right cover 45 and the second case half body 43.

A cylinder bore 47 is defined in the cylinder block 32. A piston 48 is fitted into the cylinder bore 47 slidably along a cylinder axis C (center axis of the cylinder bore 47). The piston 48 marks off the combustion chamber between the piston 48 and the cylinder head 32. An air-fuel mixture is introduced into the combustion chamber according to opening-closing operation of the intake valve. An exhaust gas in the combustion chamber is discharged according to opening-closing operation of the exhaust valve. The cylinder block 32 guides linear reciprocating motion of the piston 48.

The crankshaft 41 includes: a first crank web 41a linked, by a journal, to a bearing 49a assembled into the first case half body 42; a second crank web 41b linked, by a journal, to a bearing 49b assembled into the second case half body 43; and a crankpin 51 that extends in parallel to the rotation axis Rx and joins the first crank web 41a and the second crank web 41b to each other. The crankpin 51 forms the crank between the bearings 49a and 49b in cooperation with the first crank web 41a and the second crank web 41b. The crank is housed in the crank chamber Cr. A large end part of a connecting rod 52 that extends from the piston 48 is rotatably linked to the crankpin 51. The connecting rod 52 converts the linear reciprocating motion of the piston 48 to rotational motion of the crankshaft 41.

An alternating-current generator (hereinafter, represented as "ACG") 53 that generates electric power according to the rotation of the crankshaft 41 is joined to the crankshaft 41 outside the bearing 49a. The ACG 53 includes: an outer rotor 54 fixed to the crankshaft 41 that penetrates the first case half body 42 of the crankcase 31 and protrudes from the first case half body 42; and an inner stator 55 that is surrounded by the outer rotor 54 and disposed around the crankshaft 41. The inner stator 55 is fixed to the left cover 44. An electromagnetic coil 55a is wound around the inner stator 55. A magnet 54a is fixed to the outer rotor 54. When the outer rotor 54 rotates relative to the inner stator 55, the electric power is generated by the electromagnetic coil 55a.

A drive sprocket 56 of a valve operating mechanism is fixed to the crankshaft 41 between the outer rotor 54 of the ACG 53 and the bearing 49a. A ring-shaped cam chain 57 is wound around the drive sprocket 56. The cam chain 57 transmits the rotational power of the crankshaft 41 to the camshaft in contact with a rocker arm that drives the intake valve and the exhaust valve. Thus, the operation of the intake valve and the exhaust valve synchronizes with the linear reciprocating motion of the piston 48.

The transmission 37 is formed as a dog clutch type and is housed in a transmission chamber Tm defined in the crankcase 31 continuously from the crank chamber Cr. The main shaft 35 and the countershaft 36 are supported by the crankcase 31 rotatably by rolling bearings 58a and 58b and rolling bearings 59a and 59b. The axis Mc of the main shaft 35 and the axis Cc of the countershaft 36 are set parallel to the axis of the crankshaft 41 (rotation axis Rx). A tip end of the main shaft 35 protrudes from the bearing 58b to the outside of the second case half body 43 and is supported by the right cover 45 relatively rotatably. A bearing 62 that rotatably supports the tip end of the main shaft 35 is assembled into the right cover 45.

Plural transmission gears 61 are supported by the main shaft 35 and the countershaft 36. The transmission gears 61 are disposed between the bearings 58a and 58b and between the bearings 59a and 59b and are housed in the transmission chamber Tm. The transmission gears 61 include: rotating gears 61a supported by the main shaft 35 or the countershaft 36 relatively rotatably coaxially; fixed gears 61b that are fixed to the main shaft 35 or the countershaft 36 in such a manner as to be incapable of relative rotation and mesh with the corresponding rotating gear 61a; and shift gears 61c that are supported by the main shaft 35 or the countershaft 36 in such a manner as to be incapable of relative rotation and be capable of axial-direction displacement and mesh with the corresponding rotating gear 61a. The axial-direction displacement of the rotating gears 61a and the fixed gears 61b is restricted. When the shift gear 61c is linked to the rotating gear 61a through axial-direction displacement, relative rotation between the rotating gear 61a and the main shaft 35 or the countershaft 36 is restricted. When the shift gear 61c meshes with the fixed gear 61b of the other shaft, rotational power is transmitted between the main shaft 35 and the countershaft 36. When the shift gear 61c is linked to the rotating gear 61a that meshes with the fixed gear 61b of the other shaft, rotational power is transmitted between the main shaft 35 and the countershaft 36. Through meshing of the specific transmission gears 61 between the main shaft 35 and the countershaft 36 in this manner, rotational power is transmitted from the main shaft 35 to the countershaft 36 at a prescribed reduction ratio.

The main shaft 35 is connected to the crankshaft 41 through a primary reduction mechanism 63. The primary reduction mechanism 63 includes a primary drive gear 63a supported by the crankshaft 41 protruding from the crankcase 31 outside the bearing 49b and a primary driven gear 63b supported relatively rotatably on the main shaft 35 protruding from the crankcase 31 outside the bearing 58b. The primary driven gear 63b meshes with the primary drive gear 63a. The primary drive gear 63a is fixed to the crankshaft 41 in such a manner as to be incapable of relative rotation.

A friction clutch 65 is disposed in the clutch chamber between the second case half body 43 of the crankcase 31 and the right cover (clutch cover) 45. The friction clutch 65 includes a clutch outer (outer member) 66 supported by the main shaft 35 relatively rotatably and a clutch hub (center member) 67 supported by the main shaft 35 in such a manner as to be incapable of relative rotation inside the clutch outer 66. The primary driven gear 63b of the primary reduction mechanism 63 is linked to the clutch outer 66. Therefore, the rotation of the crankshaft 41 causes the rotation of the clutch outer 66 around the axis Mc of the main shaft 35.

The friction clutch 65 includes friction members 68 that are each supported by the clutch outer 66 and the clutch hub 67 relatively displaceably in the axial direction and, when getting contact with each other, exert a frictional force to transmit a rotational force from the clutch outer 66 to the clutch hub 67. The friction members 68 include: plural friction plates 68a that are spline-connected to the clutch outer 66 in such a manner as to be incapable of relative rotation around the main shaft 35 and have a friction material on a surface; and plural clutch plates 68b that are disposed alternately with the friction plates 68a in the axial direction and are spline-connected to the clutch hub 67 in such a manner as to be incapable of relative rotation around the main shaft 35. When the mutual contact between the friction plates 68a and the clutch plates 68b is established, the rotational force is transmitted from the primary driven gear 63b to the clutch hub 67 via the clutch outer 66. When the friction plates 68a and the clutch plates 68b are released from the mutual contact, a slide occurs between both and the transmission of the rotational force is disconnected.

By the clutch hub 67, a pressure member 71 formed into a ring shape around the axis Mc of the main shaft 35 is supported relatively displaceably in the axial direction between a first position at which the pressure member 71 receives an elastic force of a spring member 69 and constrains the mutual contact between the friction plates 68a and the clutch plates 68b and a second position at which the pressure member 71 releases the friction plates 68a and the clutch plates 68b from the mutual contact against the elastic force of the spring member 69. The clutch plate 68b is disposed at the position closest to the pressure member 71 (outermost side in the axial direction of the axis Mc) in the friction members 68. The clutch plate 68b on the outermost side is supported by the pressure member 71 in the axial direction at a flat surface orthogonal to the axis Mc of the main shaft 35. The pressure member 71 prevents the inclination of the friction plates 68a and the clutch plates 68b. A damper plate 68c having a cork material stuck to a surface is disposed at the position remotest from the pressure member 71 (innermost side) in the friction members 68. The damper plate 68c is supported by the clutch hub 67. Due to the prevention of the inclination of the friction members 68 and the damping effect by the cork material, the connection-disconnection performance of the friction clutch 65 is improved.

As the spring member 69, a disc spring formed into a ring shape around the axis Mc of the main shaft 35 is used. The inner edge of the disc spring engages with the clutch hub 67. The outer edge of the disc spring is pressed against the pressure member 71. The disc spring exerts an elastic force that drives the pressure member 71 toward the damper plate 68c backed with the clutch hub 67.

The friction clutch 65 has a clutch release mechanism 72 that forcibly releases the friction plates 68a and the clutch plates 68b from the mutual contact against the elastic force of the spring member 69. The clutch release mechanism 72 includes: a push rod 73 that is inserted in the main shaft 35 along the axis (axis Mc) of the main shaft 35 and is disposed in the main shaft 35 relatively displaceably in the axial direction; a lifter member (operation member) 74 that is mounted on the outer periphery of the main shaft 35 relatively displaceably in the axial direction between the clutch hub 67 and the right cover 45 and is displaced in the axial direction of the main shaft 35 in operative connection with displacement of the push rod 73; and a lifter plate 75 that is linked to the clutch hub 67 in the axial direction at a fulcrum Ls separate from a force point Lf by a first distance, the force point Lf receiving displacement of the lifter member 74, the lifter plate 75 being linked to the pressure member 71 in the axial direction at an action point Lw separate from the fulcrum Ls by a second distance shorter than the first distance. The lifter plate 75 engages with the lifter member 74 from the right cover 45 side at the radial-direction inner edge and is supported by the clutch hub 67 from the right cover 45 side at the radial-direction outer edge. Formed on the pressure member 71 is a linear protrusion 76 that extends along a tangent in contact with the circumference around the axis Mc of the main shaft 35 and that is in contact with the lifter plate 75 between the radial-direction inner edge and the radial-direction outer edge. The radial-direction inner edge of the lifter plate 75 functions as the force point Lf. The radial-direction outer edge of the lifter plate 75 functions as the fulcrum Ls. The protrusion 76 of the pressure member 71 functions as the action point Lw. Displacement of the pressure member 71 is forcibly caused from the first position toward the second position according to axial-direction displacement of the lifter member 74. The displacement of the lifter member 74 is transmitted to the pressure member 71 after being reduced.

The clutch hub 67 includes a cylindrical body 77 that has splines in the outer periphery and supports the clutch plates 68b from the inside in the radial direction. A ring-shaped support member 78 formed into a ring shape around the axis Mc of the main shaft 35 is overlapped with the cylindrical body 77 from the axial direction. The ring-shaped support member 78 supports the radial-direction outer edge of the lifter plate 75. Plural (here, eight) collar members 81 that guide axial-direction displacement of the pressure member 71 are supported by the ring-shaped support member 78. The collar members 81 form bosses for each of bolts 79 that fasten the spring member 69 to the cylindrical body 77. A pressing plate 82 formed into a ring shape around the axis Mc of the main shaft 35 is overlapped with the collar members 81 from the axial direction. The pressing plate 82 constrains the spring member 69 toward the pressure member 71. A flange member 84 is joined to the cylindrical body 77 by fastening members 83 formed of bolts that are disposed alternately with the collar members 81, which are the bosses, in the peripheral direction and are screwed into the cylindrical body 77. The flange member 84 sandwiches the friction members 68 with the pressure member 71. The bolts 79 sequentially penetrate the pressing plate 82, the collar members 81, and the ring-shaped support member 78 and are screwed into the cylindrical body 77 to join the pressing plate 82, the collar members 81, and the ring-shaped support member 78 to the cylindrical body 77. A support cylinder 86 is formed integrally with the flange member 84. The support cylinder 86 is mounted on the main shaft 35, spline-connected to the main shaft 35, fastened in such a manner as to be incapable of relative displacement in the axial direction by a nut member 85 screwed to the main shaft 35. The cylindrical body 77 is molded from an aluminum-based material such as an aluminum alloy. The collar members 81 and the flange member 84 are each molded from an iron-based material such as carbon steel.

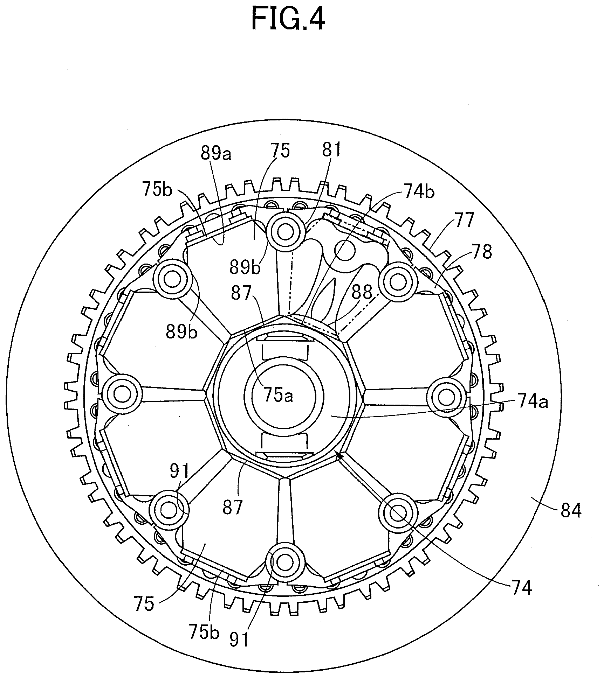

The lifter member 74 has a bearing part 74a that forms a circular cylindrical surface in slidable contact with the outer periphery of the main shaft 35 and an extended part 74b that is continuous from the bearing part 74a toward the crankcase 31 and forms a space between the extended part 74b and the outer periphery of the main shaft 35. The nut member 85 is housed in the extended part 74b. As illustrated in FIG. 4, at the outer periphery of the extended part 74b, a flat surface 87 that supports radial-direction inner edges 75a of the lifter plates 75 partitioned by a tangent is formed in the radial direction. Here, eight lifter plates 75 are disposed around the axis Mc of the main shaft 35 evenly. At the end of the extended part 74b on the clutch hub 67 side, a protruding piece 88 that spreads from the flat surface 87 outward in the radial direction and supports the radial-direction inner edges 75a of the lifter plates 75 in the axial direction is integrally formed.

The ring-shaped support member 78 of the clutch hub 67 supports radial-direction outer edges 75b of the lifter plates 75 partitioned by a tangent and forms the fulcrums Ls of the lifter plates 75 to form a first restricting part 89a that restricts displacement of the lifter plates 75 in the radial direction. The collar members 81 form second restricting parts 89b that are in contact with the left and right edges of the lifter plates 75 inside the fulcrums Ls in the radial direction and restrict displacement of the lifter plates 75 in the rotational direction. In the lifter plates 75, reliefs 91 that are recessed from the edge to follow the circular cylindrical surface of the collar member 81 are formed.

As illustrated in FIG. 3, the clutch release mechanism 72 includes a lifter piece 92 that is disposed in the main shaft 35 relatively displaceably in the axial direction coaxially with the push rod 73 and is linked to a tip end of the push rod 73 relatively rotatably around the axis Mc, which is the rotation axis of the main shaft 35. A through-hole 93 that forms a circular cylindrical space in the radial direction is bored in the lifter piece 92. In the through-hole 93, a pin member 94 that protrudes from the outer periphery of the main shaft 35 in the radial direction between the clutch hub 67 and the right cover 45 is inserted. The bearing part 74a of the lifter member 74 has a groove 95 that accepts the pin member 94 protruding from the outer periphery of the main shaft 35. The lifter member 74 covers the pin member 94 in such a manner as to be incapable of relative rotation around the axis Mc of the main shaft 35. The elastic force of the spring member 69 acts on the pressure member 71 and drives the lifter member 74 toward the clutch hub 67. The lifter piece 92 is pressed against the tip end of the push rod 73 by the action of the spring member 69. The lifter piece 92 is linked to the push rod 73 in this manner. The lifter member 74 transmits axial-direction displacement of the pin member 94 toward the pressure member 71. Displacement of the pressure member 71 is forcibly caused from the first position toward the second position according to the axial-direction displacement of the push rod 73.

The clutch release mechanism 72 includes a hydraulic piston 97 housed displaceably in the axial direction of the main shaft 35 in a hydraulic cylinder (clutch release cylinder) 96 defined in the cylinder casing 39. The push rod 73 is linked to the hydraulic piston 97 relatively rotatably around the rotation axis of the main shaft 35 (axis Mc). The push rod 73 is pressed against the hydraulic piston 97 by the action of the elastic force of the spring member 69. When a hydraulic pressure is supplied from the master cylinder to a hydraulic chamber 98, the push rod 73 is displaced toward the right cover 45 against the elastic force of the spring member 69.

The push rod 73 includes a main shaft 73a, a first end shaft 73b that is linked to one end of the main shaft 73a coaxially with the main shaft 73a and forms a hemispherical surface that gets contact with the hydraulic piston 97, and a second end shaft 73c that is linked to the other end of the main shaft 73a coaxially with the main shaft 73a and forms a ring-shaped groove 99 that sandwiches spherical bodies with the lifter piece 92. The main shaft 73a, the first end shaft 73b, and the second end shaft 73c are each formed into a shaft body whose section has a circular shape. In the first end shaft 73b and the second end shaft 73c, small-diameter shafts 101 fitted into fitting holes formed at the end parts of the main shaft 73a are integrally formed. Due to disassembling of the push rod 73 into the three bodies in this manner, the end parts of the push rod 73 can be processed with high accuracy.

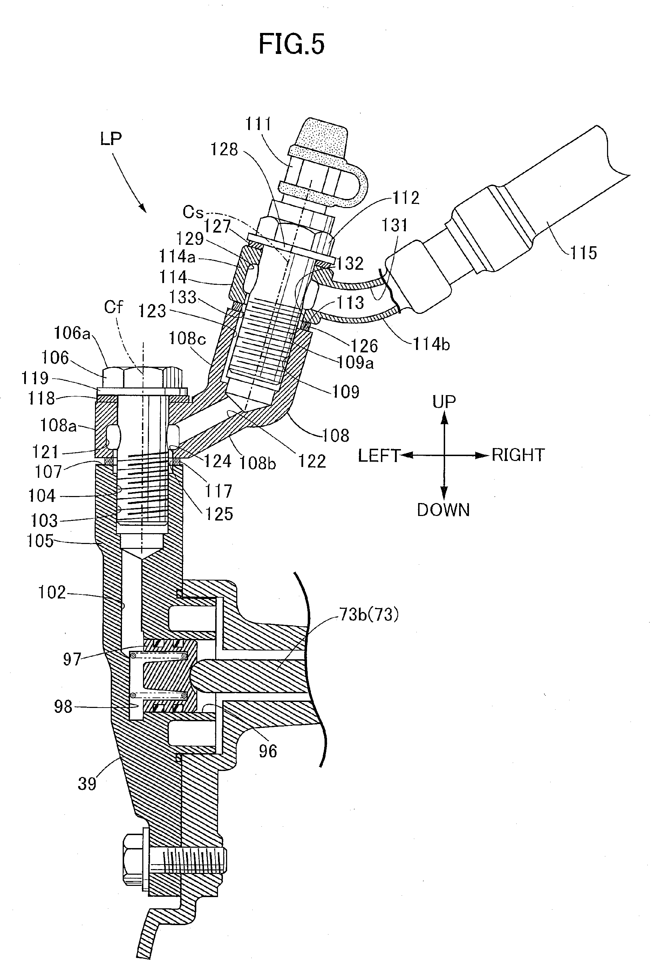

FIG. 5 schematically illustrates the configuration of the oil path system LP according to a first embodiment. The oil path system LP includes: an oil path member 105 that is integrated with the cylinder casing 39 and defines a screw groove of a female screw 104 in a through-hole (hereinafter, referred to as "first through-hole") 103 connected to an oil path 102; a bolt-shaped male screw member 106 that is screwed from the opening of the first through-hole 103 into the oil path member 105 and has a screw thread that enters the screw groove of the female screw 104; and a linking member 108 having a female screw part 108c that is continuous with an arm part 108b extending from a ring-shaped part 108a that is overlapped with a mating surface 107 including the opening of the first through-hole 103 and is joined to the oil path member 105 by the male screw member 106, the female screw part 108c defining a screw groove 109a in a through-hole (hereinafter, referred to as "second through-hole") 109 connected to the oil path 102 through the first through-hole 103. The oil path system LP further includes: an air removing bolt 112 that is screwed from the opening of the second through-hole 109 into the linking member 108 and has an air removing passage leading to an air removing port that is opened toward external air and is closed by a bleeder bolt 111; a connecting tube member 114 having an arm part 114b extending from a ring-shaped part 114a that is overlapped with a mating surface 113 including the opening of the second through-hole 109 and is joined to the linking member 108 by the air removing bolt 112; and an oil tube 115 that is joined to the arm part 114b of the connecting tube member 114 and extends toward the master cylinder.

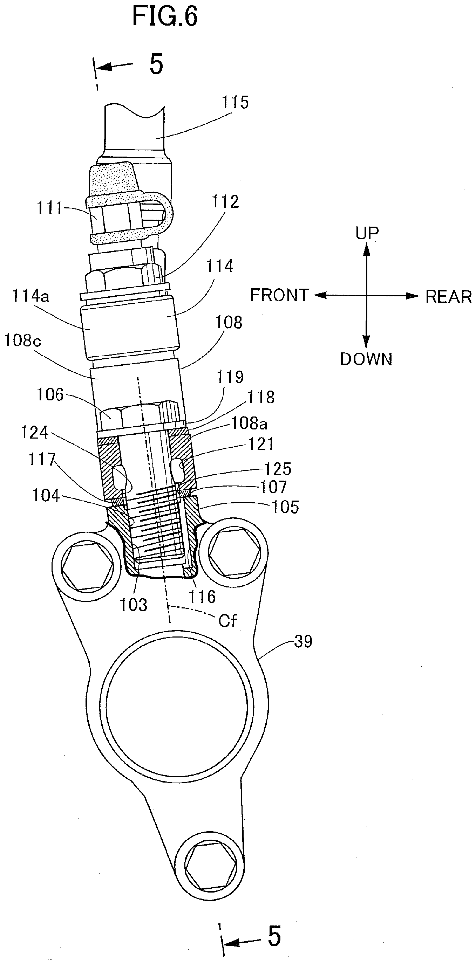

The first through-hole 103 of the oil path member 105 has an axis Cf in an upright posture and is opened upward. In the first through-hole 103, a screw groove is engraved in a spiral manner around the axis Cf from the opening. The oil path 102 of the oil path member 105 is connected to the hydraulic chamber 98 in the cylinder casing 39. As illustrated in FIG. 6, in the female screw 104 of the oil path member 105, a long groove 116 that is opened at the opening and traverses the screw groove in the axial direction is formed. The long groove 116 is deeper than the screw groove. The long groove 116 linearly extends in parallel to the axis Cf of the first through-hole 103. The axis Cf of the first through-hole 103 slightly tilts forward. The long groove 116 is disposed at the highest position in the gravity direction on the outer diameter circle of the female screw 104 drawn within a plane orthogonal to the axis Cf of the first through-hole 103.

A seal washer 117 is sandwiched between the oil path member 105 and the ring-shaped part 108a of the linking member 108 at the mating surface 107 including the opening of the first through-hole 103. In the mating surface 107, a recess may be formed coaxially with the first through-hole 103 in such a manner as to follow the outer diameter of the seal washer 117. The recess allows the seal washer 117 to be positioned in the surface direction of the mating surface 107. Between the ring-shaped part 108a of the linking member 108 and a head part 106a of the male screw member 106, a seal washer 118 and a washer 119 are sandwiched in that order from a mating surface of the ring-shaped part 108a.

A ring-shaped oil path 121 is defined around a shaft part of the male screw member 106 in the ring-shaped part 108a of the linking member 108. A connecting oil path 122 that connects the ring-shaped oil path 121 to the second through-hole 109 is defined in the arm part 108b of the linking member 108. The second through-hole 109 has an axis Cs in an upright posture and is opened upward. In the second through-hole 109, the screw groove 109a is engraved in a spiral manner around the axis Cs from the opening. In the female screw of the linking member 108, a long groove 123 that is opened at the opening and traverses the screw groove 109a in the axial direction is formed. The long groove 123 is deeper than the screw groove 109a. The long groove 123 linearly extends in parallel to the axis Cs of the second through-hole 109. The axis Cs of the second through-hole 109 tilts toward the inside of the vehicle. Therefore, the axis Cs is displaced inward as the position moves upward. The long groove 123 is disposed at the highest position in the gravity direction on the outer diameter circle of the female screw drawn within a plane orthogonal to the axis Cs of the second through-hole 109.

The ring-shaped part 108a of the linking member 108 and the seal washer 117 form spaces 124 and 125 around the shaft part of the male screw member 106 between the ring-shaped oil path 121 and the first through-hole 103. The spaces 124 and 125 connect the open end of the long groove 116 to the ring-shaped oil path 121. Therefore, a gas in the long groove 116 can go through the spaces 124 and 125 and flow into the ring-shaped oil path 121.

A seal washer 126 is sandwiched between the linking member 108 and the ring-shaped part 114a of the connecting tube member 114 at the mating surface 113 including the opening of the second through-hole 109. In the mating surface 113, a recess may be formed coaxially with the second through-hole 109 in such a manner as to follow the outer diameter of the seal washer 126. The recess allows the seal washer 126 to be positioned in the surface direction of the mating surface 113. Between the ring-shaped part 114a of the connecting tube member 114 and a head part of the air removing bolt 112, a seal washer 127 and a washer 128 are sandwiched in that order from a mating surface of the ring-shaped part 114a.

A ring-shaped oil path 129 is defined around a shaft part of the air removing bolt 112 in the ring-shaped part 114a of the connecting tube member 114. In the arm part 114b of the connecting tube member 114, a connecting flow path 131 that connects the ring-shaped oil path 129 to a flow path in the oil tube 115 joined to the arm part 114b is defined.

The ring-shaped part 114a of the connecting tube member 114 and the seal washer 126 form spaces 132 and 133 around the shaft part of the air removing bolt 112 between the ring-shaped oil path 129 and the second through-hole 109. The spaces 132 and 133 connect the open end of the long groove 123 to the ring-shaped oil path 129. Therefore, a gas in the long groove 123 can go through the spaces 132 and 133 and flow into the ring-shaped oil path 129.

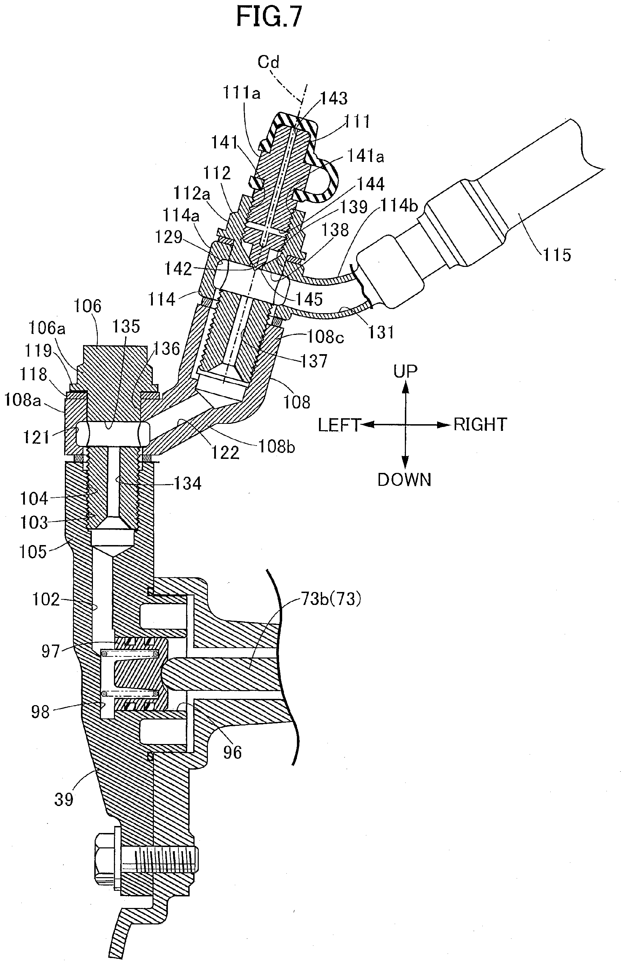

As illustrated in FIG. 7, in the male screw member 106, an axial-direction oil path 134 that extends from the tip end of the shaft part toward the head part 106a along the axis and a radial-direction oil path 135 that extends in the radial direction from the axial-direction oil path 134 and is opened to the ring-shaped oil path 121 are defined. Fluid can come and go between the connecting oil path 122 and the oil path 102 through the axial-direction oil path 134 and the radial-direction oil path 135 of the male screw member 106. The shaft part of the male screw member 106 is fitted into a through-hole 136 of the linking member 108 above the ring-shaped oil path 121.

In the air removing bolt 112, an axial-direction oil path 137 that extends from the tip end of the shaft part toward a head part 112a along the axis and a radial-direction oil path 138 that extends in the radial direction from the axial-direction oil path 137 and is opened to the ring-shaped oil path 129 are defined. Fluid can come and go between the flow path in the oil tube 115 and the connecting oil path 122 through the axial-direction oil path 137 and the radial-direction oil path 138 of the air removing bolt 112. The shaft part of the air removing bolt 112 is fitted into a through-hole 139 of the connecting tube member 114 above the ring-shaped oil path 129.

An air removing passage 141 extends along the axis on an extended line of the axial-direction oil path 137 and penetrates the head part 112a. The air removing passage 141 has an axis Cd in an upright posture and is opened upward. In the air removing passage 141, a screw groove of a female screw 141a is engraved in a spiral manner around the axis Cd from the opening. The diameter of the air removing passage 141 is enlarged relative to the axial-direction oil path 137 and a valve seat 142 is defined between the axial-direction oil path 137 and the air removing passage 141. In the bleeder bolt 111, an opened hole 143 that is opened to external air at the head part 111a and linearly extends along the axis and a connecting hole 144 that extends in the radial direction from the opened hole 143 and is opened at the screw groove are defined. When the bleeder bolt 111 is fastened, a valve body 145 at the tip end sits on the valve seat 142. The open end of the axial-direction oil path 137 is closed by the valve body 145. When the bleeder bolt 111 is loosened, the valve body 145 is separated from the valve seat 142 and fluid in the axial-direction oil path 137 flows into the connecting hole 144 and the opened hole 143 from the clearance between the screw groove of the female screw 141a and the screw thread of the bleeder bolt 111.

Next, operation of the present embodiment will be described. When the clutch lever 18 is released from an external force and the hydraulic chamber 98 of the cylinder casing 39 is opened, the elastic force of the spring member 69 acts on the push rod 73 via the pressure member 71, the lifter plates 75, the lifter member 74, the pin member 94, and the lifter piece 92. Therefore, the pressure member 71 receives the elastic force of the spring member 69 and is kept at the first position. The mutual contact between the friction plates 68a and the clutch plates 68b is established and a driving force is transmitted from the clutch outer 66 to the clutch hub 67. The main shaft 35 rotates according to the driving force input to the clutch outer 66.

When the clutch lever 18 is operated at the time of stop of the two-wheeled motor vehicle or for shift change of the transmission 37, a hydraulic pressure is supplied from the master cylinder to the cylinder casing 39. The hydraulic pressure goes from the oil tube 115 and through the connecting flow path 131, the ring-shaped oil path 129 of the connecting tube member 114, the radial-direction oil path 138 and the axial-direction oil path 137 of the air removing bolt 112, the connecting oil path 122 and the ring-shaped oil path 121 of the linking member 108, the radial-direction oil path 135 and the axial-direction oil path 134 of the male screw member 106, and the oil path 102 of the oil path member 105 to act on the hydraulic chamber 98 of the hydraulic cylinder 96. The pressure of the hydraulic chamber 98 rises and the piston 97 drives the push rod 73 toward the right cover 45.

Displacement of the push rod 73 yields displacement of the lifter member 74 through the lifter piece 92 and the pin member 94. When the lifter member 74 is displaced in the axial direction, the lifter plates 75 receive the displacement of the lifter member 74 at the force point Lf and transmit the displacement from the action point Lw to the pressure member 71 while being constrained at the fulcrum Ls in the axial direction. The pressure member 71 is displaced from the first position toward the second position against the elastic force of the spring member 69 and the friction plates 68a and the clutch plates 68b are released from the mutual contact. The transmission of the rotational force from the clutch outer 66 to the clutch hub 67 is disconnected. The main shaft 35 is released from the driving force. In this manner, connection and disconnection are switched between the clutch outer 66 and the clutch hub 67 in the friction clutch 65 according to operation of the clutch lever 18.

When the oil path 102 is filled with oil, the oil circulates from the long groove 116 to the clearance between the screw thread and the screw groove in the oil path member 105. The circulating oil pushes out air from the clearance and the long groove 116 toward the opening of the mating surface 107. In this manner, the air that remains in the screw groove of the first through-hole 103 is discharged from the opening toward the ring-shaped oil path 121 of the linking member 108. Similarly, in the linking member 108, the oil circulates from the long groove 123 to the clearance between the screw thread and the screw groove. The circulating oil pushes out air from the clearance and the long groove 123 toward the opening of the mating surface 113. In this manner, the air that remains in the screw groove of the second through-hole 109 is discharged from the opening toward the ring-shaped oil path 129 of the connecting tube member 114. Air bleeding is implemented. In the present embodiment, the flexibility in routing of the oil path is improved due to the joining of the linking member 108 to the oil path member 105.

In the present embodiment, the long groove 116 of the first through-hole 103 is deeper than the screw groove of the female screw 104. Between adjacent screw grooves, air linearly goes out with avoidance of the screw thread of the male screw. Thus, smooth air removal is implemented. In addition, because the long groove 116 linearly extends in parallel to the axis Cf of the first through-hole 103, the long groove 116 can be easily processed in the oil path member 105.

Similarly, the long groove 123 of the second through-hole 109 is deeper than the screw groove 109a of the female screw. Between adjacent screw grooves, air linearly goes out with avoidance of the screw thread of the male screw. Thus, smooth air removal is implemented. In addition, because the long groove 123 linearly extends in parallel to the axis Cs of the second through-hole 109, the long groove 123 can be easily processed in the linking member 108.

The long groove 116 of the first through-hole 103 is disposed at the highest position in the gravity direction on the outer diameter circle of the female screw 104 drawn within a plane orthogonal to the axis Cf of the first through-hole 103. Because air is lighter than oil, air rises in the clearance between the screw groove and the screw thread due to the action of the gravity and flows into the long groove 116. Thus, efficient air removal can be implemented.

Similarly, the long groove 123 of the second through-hole 109 is disposed at the highest position in the gravity direction on the outer diameter circle of the female screw drawn within a plane orthogonal to the axis Cs of the second through-hole 109. Because air is lighter than oil, air rises in the clearance between the screw groove 109a and the screw thread due to the action of the gravity and flows into the long groove 123. Thus, efficient air removal can be implemented.

The oil path system LP according to the present embodiment has the air removing passage 141 that is connected to the long grooves 116 and 123 and leads to the air removing port that is opened toward external air and is closed by the bleeder bolt 111. The air that flows into the long groove 116 from the clearance between the screw groove and the screw thread in the first through-hole 103 is discharged from the ring-shaped oil path 121 of the linking member 108 to the connecting oil path 122. Thereafter, the air passes through the axial-direction oil path 137 in the air removing bolt 112 and is discharged from the air removing passage 141 to external air. The air that flows into the long groove 123 from the clearance between the screw groove and the screw thread in the second through-hole 109 is discharged to the ring-shaped oil path 129 of the connecting tube member 114. Thereafter, the air flows from the radial-direction oil path 138 to the axial-direction oil path 137 and is discharged from the air removing passage 141 to external air. In this manner, air removal from the oil path is implemented.

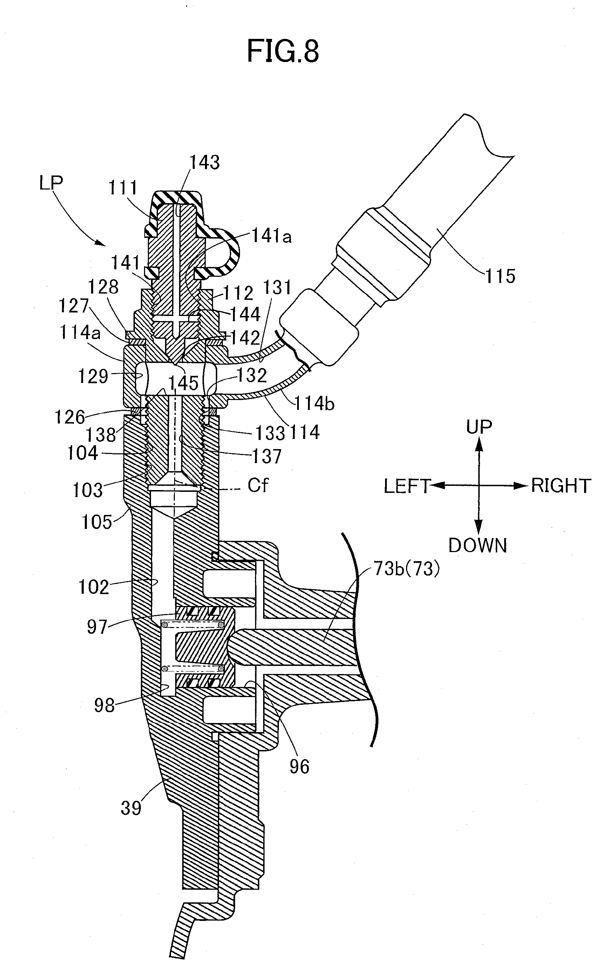

FIG. 8 schematically illustrates the configuration of an oil path system LP according to a second embodiment. In the second embodiment, the air removing bolt 112 is screwed into the oil path member 105. The air removing bolt 112 functions as a male screw member that is screwed from the opening of the first through-hole 103 into the oil path member 105 and has a screw thread that enters the screw groove of the female screw 104. The ring-shaped part 114a of the connecting tube member 114 is overlapped with the mating surface 107 including the opening of the first through-hole 103.

When the clutch lever 18 is operated at the time of stop of the two-wheeled motor vehicle or for shift change of the transmission 37, a hydraulic pressure is supplied from the master cylinder to the cylinder casing 39. The hydraulic pressure goes from the oil tube 115 and through the connecting flow path 131, the ring-shaped oil path 129 of the connecting tube member 114, the radial-direction oil path 138 and the axial-direction oil path 137 of the air removing bolt 112, and the oil path 102 of the oil path member 105 to act on the hydraulic chamber 98 of the hydraulic cylinder 96. The pressure of the hydraulic chamber 98 rises and the piston 97 drives the push rod 73 toward the right cover 45.

When the oil path 102 is filled with oil, the oil circulates from the long groove 116 to the clearance between the screw thread and the screw groove in the oil path member 105. The circulating oil pushes out air from the clearance and the long groove 116 toward the opening of the mating surface 107. In this manner, the air that remains in the screw groove of the first through-hole 103 is discharged from the opening toward the ring-shaped oil path 129 of the connecting tube member 114. Air bleeding is implemented. Besides, the long groove 116 of the first through-hole 103 is configured similarly to the first embodiment and exerts effects similarly to the first embodiment.

### [DESCRIPTION OF REFERENCE NUMERALS AND SYMBOLS]

96 ··· Clutch release cylinder (hydraulic cylinder), 102 ··· Liquid path (oil path), 103 ··· Through-hole (first through-hole), 104 ··· Female screw, 105 ··· Liquid path member (oil path member), 106 ··· Male screw member, 108 ··· Linking member, 108a ··· Ring-shaped part, 108b ··· Arm part, 109 ··· Through-hole (second through-hole), 111 ··· Bolt (bleeder bolt), 112 ··· Male screw member (air removing bolt), 116 ··· Long groove, 122 ··· Liquid path (connecting oil path), 123 ··· Long groove, 141 ··· Air removing passage, LP ··· Liquid path system (oil path system)

## Claims

1. A liquid path system comprising:
a liquid path member (105) that defines a screw groove of a female screw (104) in a spiral manner from an opening in a first through hole (103) that has an axis (Cf) directed in an upright posture, the first through hole (103) being opened upward and being connected to a liquid path (102; 122); and
a male screw member (106) that is screwed from the opening into the liquid path member (105) and has a screw thread that enters the screw groove,
wherein a long groove (116) that is opened at the opening and traverses the screw groove in an axial direction is formed in the female screw (104),
an air removing passage (141) that is connected to the long groove (116) and leads to an air removing port that is opened toward external air and closed by a bolt (111),
**characterized in that**,
the liquid path system further comprises
a linking member (108) having a ring-shaped part (108a), an arm part (108b), and a female screw part (108c), the ring-shaped part (108a) being overlapped with a mating surface including the aforementioned opening, the ring-shaped part (108a) being joined to the liquid path member (105) by the male screw member (106), the arm part (108b) extending from the ring-shaped part (108a), the female screw part (108c) being connected with the arm part (108b) and defining another screw groove in a spiral manner from another opening in a second through-hole (109) that has another axis (Cs) in the upright posture, the second through-hole (109) being opened upward and connected to the liquid path (102, 122), and
an air removing bolt (112) that is screwed from the another opening into the linking member (108) and has the air removing passage (141) leading to the liquid path (102, 122),
another long groove (123) being formed in the female screw part (108c), opened at the another opening, and traversing the another screw groove in the axial direction.

2. The liquid path system according to claim 1, wherein the respective long groove (116; 123) is deeper than the corresponding screw groove.

3. The liquid path system according to claim 1 or 2, wherein each long groove (116; 123) linearly extends in parallel to the respective axis (Cf; Cs).

4. The liquid path system according to claim 3, wherein the respective axes Cf; Cs) of the first and the second through-hole (103; 109) tilt with respect to a gravity direction, and each long groove (116; 123) is disposed at a highest position in the gravity direction on an outer diameter circle of the female screw (104) or the female screw part (108c) drawn within a plane orthogonal to the respective axis (Cf; Cs).

5. The liquid path system according to any one of claims 1 to 4, wherein the liquid path member (105) is to be mounted on a vehicle and has a clutch release cylinder (96) connected to the liquid path (102, 122).

## Patentansprüche

1. Flüssigkeitswegsystem, das aufweist:
ein Flüssigkeitswegelement (105), das eine Schraubennut einer Innengewindeschraube (104) in Spiralform von einer Öffnung in einem ersten Durchgangsloch (103), die eine Achse (Cf) hat, die in einer aufrechten Stellung ausgerichtet ist, definiert, wobei das erste Durchgangsloch (103) nach oben geöffnet ist und mit einem Flüssigkeitsweg (102; 122) verbunden ist; und
ein Außengewindeschraubenelement (106), das von der Öffnung in das Flüssigkeitswegelement (105) eingeschraubt ist und ein Schraubengewinde hat, das in die Schraubennut eintritt,
wobei eine Langnut (116), die an der Öffnung geöffnet ist und die Schraubennut in einer axialen Richtung durchquert, in der Innengewindeschraube (104) ausgebildet ist,
einen Luftauslasskanal (141), der mit der Langnut (116) verbunden ist und zu einer Luftauslassöffnung führt, die zur Außenluft geöffnet ist und durch einen Bolzen (111) geschlossen wird,
**dadurch gekennzeichnet, dass**
das Flüssigkeitswegsystem weiterhin aufweist
ein Verbindungselement (108), das ein ringförmiges Teil (108a), ein Armteil (108b) und ein Innengewindeschraubenteil (108c) hat, wobei das ringförmige Teil (108a) mit einer Gegenfläche überlappt ist, die die oben erwähnte Öffnung aufweist, wobei das ringförmige Teil (108a) mit dem Flüssigkeitswegelement (105) durch das Außengewindeelement (106) verbunden ist, wobei das Armteil (108b) von dem ringförmigen Teil (108a) aus verläuft, das Innengewindeschraubenteil (108c) mit dem Armteil (108b) verbunden ist und eine weitere Schraubennut in Spiralform aus einer anderen Öffnung in einer zweiten Durchgangsöffnung (109) definiert, die eine andere Achse (Cs) in der aufrechten Stellung hat, wobei das zweite Durchgangsloch (109) nach oben geöffnet ist und mit dem Flüssigkeitsweg (102, 122) verbunden ist, und
einen Luftauslassbolzen (112), der von der anderen Öffnung in das Verbindungselement (108) eingeschraubt ist und einen Luftauslasskanal (141) hat, der zum Flüssigkeitsweg (102, 122) führt,
wobei eine weitere Langmut (123) im Innengewindeschraubenteil (108c) ausgebildet ist, das sich an der anderen Öffnung öffnet und durch die andere Schraubennut in der axialen Richtung hindurchgeht.

2. Flüssigkeitswegsystem nach Anspruch 1, wobei die jeweilige Langnut (116; 123) tiefer als die zugehörige Schraubennut ist.

3. Flüssigkeitswegsystem nach Anspruch 1 oder 2, wobei eine jede Langnut (116; 123) linear parallel zu der jeweiligen Achse (Cf; Cs) verläuft.

4. Flüssigkeitswegsystem nach Anspruch 3, wobei die jeweiligen Achsen (Cf; Cs) des ersten und zweiten Durchgangslochs (103; 109) sich bezüglich einer Schwerkraftrichtung neigen, und eine jede Langnut (116; 123) an der höchsten Position in der Schwerkraftrichtung an einem Außendurchmesserkreis der Innengewindeschraube (104) oder dem Innengewindeschraubenteil (108c) angeordnet ist, der mit einer Ebene orthogonal zur der jeweiligen Achse (Cf; Cs) ausgelegt ist.

5. Flüssigkeitswegsystem nach einem der Ansprüche 1 bis 4, wobei das Flüssigkeitswegelement (105) an einem Fahrzeug anzubringen ist und einen Kupplungslösezylinder (96) hat, der mit dem Flüssigkeitsweg (102, 122) verbunden ist.

## Revendications

1. Système de trajet de liquide comprenant :
un élément de trajet de liquide (105) qui définit une rainure de vis d'une vis femelle (104) en spirale à partir d'une ouverture dans un premier trou traversant (103) qui a un axe (Cf) dirigé dans une posture verticale, le premier trou traversant (103) étant ouvert vers le haut et étant relié à un trajet de liquide (102 ; 122) ; et
un élément de vis mâle (106) qui est vissé depuis l'ouverture dans l'élément de trajet de liquide (105) et a un filetage de vis qui pénètre dans la rainure de vis,
dans lequel une longue rainure (116) qui est ouverte au niveau de l'ouverture et traverse la rainure de vis dans une direction axiale est formée dans la vis femelle (104),
un passage d'évacuation d'air (141) qui est relié à la longue rainure (116) et conduit à un orifice d'évacuation d'air qui est ouvert vers l'air extérieur et fermé par un boulon (111),
**caractérisé en ce que**,
le système de trajet de liquide comprend en outre
un élément de liaison (108) ayant une partie en forme d'anneau (108a), une partie formant bras (108b) et une partie de vis femelle (108c), la partie en forme d'anneau (108a) étant recouverte d'une surface de couplage comportant l'ouverture susmentionnée, la partie en forme d'anneau (108a) étant jointe à l'élément de trajet de liquide (105) par l'élément de vis mâle (106), la partie formant bras (108b) s'étendant de la partie en forme d'anneau (108a), la partie de vis femelle (108c) étant reliée à la partie formant bras (108b) et définissant une autre rainure de vis en spirale à partir d'une autre ouverture dans un deuxième trou traversant (109) qui a un autre axe (Cs) dans la posture verticale, le deuxième trou traversant (109) étant ouvert vers le haut et relié au trajet de liquide (102, 122), et
un boulon d'évacuation d'air (112) qui est vissé depuis l'autre ouverture dans l'élément de liaison (108) et dispose du passage d'évacuation d'air (141) menant au trajet de liquide (102, 122),
une autre longue rainure (123) étant formée dans la partie de vis femelle (108c), ouverte au niveau de l'autre ouverture, et traversant l'autre rainure de vis dans la direction axiale.

2. Système de trajet de liquide selon la revendication 1, dans lequel la longue rainure respective (116 ; 123) est plus profonde que la rainure de vis correspondante.

3. Système de trajet de liquide selon la revendication 1 ou 2, dans lequel chaque longue rainure (116 ; 123) s'étend linéairement parallèlement à l'axe respectif (Cf ; Cs).

4. Système de trajet de liquide selon la revendication 3, dans lequel les axes respectifs (Cf; Cs) du premier et du deuxième trou traversant (103; 109) s'inclinent par rapport à une direction de gravité, et chaque longue rainure (116 ; 123) est disposée à une position la plus élevée dans la direction de gravité sur un cercle de diamètre extérieur de la vis femelle (104) ou de la partie de vis femelle (108c) dessinée dans un plan orthogonal à l'axe respectif (Cf ; Cs).

5. Système de trajet de liquide selon l'une quelconque des revendications 1 à 4, dans lequel l'élément de trajet de liquide (105) est destiné à être monté sur un véhicule et dispose d'un cylindre de débrayage (96) relié au trajet de liquide (102, 122).
